# FASCICULE DE BREVET EUROPEEN

(11) **EP 0 991 973 B1**
(45) Date de publication et mention de la délivrance du brevet: **25.02.2004**
(21) Numéro de dépôt: 98929480.6
(22) Date de dépôt: 04.06.1998
(51) Int. Cl.: G02C 3/02, G02C 11/00

(54) **BRANCHE DE LUNETTES A MAINTIEN CAPILLAIRE**
BRILLENBUEGEL MIT EINEM HAARBEFESTIGUNGSKLIP
BOW OF SPECTACLES MAINTAINED BY THE HAIR

(30) Priorité: 27.06.1997 FR 9708253; 21.10.1997 FR 9713147
(43) Date de publication de la demande: 12.04.2000
(73) Titulaire: Napoletano, William, 06100 Nice (FR); Napoletano, Christine, 06100 Nice (FR)
(72) Inventeur: Napoletano, William, 06100 Nice (FR); Napoletano, Christine, 06100 Nice (FR)
(74) Mandataire: Hautier, Jean-Louis
(86) Numéro de dépôt international: PCT/FR1998/001128
(87) Numéro de publication internationale: WO 1999/000693

(56) Documents cités:
- DE-A- 3 042 932
- DE-A- 4 240 162
- US-A- 2 766 657
- US-A- 5 235 727
- US-A- 5 355 185
- US-A- 5 471 258

## Description

La présente invention concerne un perfectionnement aux branches de lunettes. Ce perfectionnement a trait au maintien de la paire de lunettes sur la tête de l'utilisateur.

Ce mode de fixation est notamment utile lorsque l'utilisateur veut regarder sans ses lunettes mais en les conservant sur sa tête. En général, l'instant où les lunettes sont portées sur la tête est court.

L'état de la technique propose, par l'intermédiaire de nombreux documents, tels que FR-A-2.704.658, FR-A-2.646.721 ou FR-A-2.611.928, de maintenir les lunettes lorsque celles-ci sont en position d'utilisation sur le visage de l'utilisateur, c'est-à-dire en appui sur le nez et les oreilles.

Tous ces documents nécessitent une attache souple qui relie les deux extrémités libres des deux branches. Outre que cette attache est peu esthétique, elle peut s'avérer gênante lors de la mise en place ou du retrait des lunettes. De plus, lorsque les lunettes ne sont pas utilisées, elles vont pendre autour du cou, ce qui peut les endommager lors d'activités nécessitant l'appui d'objets au niveau du torse.

Le document WO-A-91/07685 a pour objet des branches de lunettes qui sont conçues de façon à définir une distance latérale entre les branches supérieure à la largeur de la tête, dans la région antérieure des tempes, pour éviter tout contact entre les branches et la tête dans ladite région. De préférence, les branches comprennent une section divergente, une section de transition, une section convergente, et une section de retenue, la section de transition définissant la plus grande distance entre les branches. La section de retenue s'étend derrière la section convergente, créant une interface entre les lunettes et la tête. La section de retenue peut comprendre un dispositif de traction qui améliore la retenue des lunettes sur la tête en augmentant le coefficient de friction statique entre les lunettes et la tête.

Ces branches de lunettes permettent une retenue par friction par rapport aux tempes de l'utilisateur. Cette retenue doit également pouvoir agir lorsque les lunettes sont sur la tête. Néanmoins, la stabilité de l'ensemble n'est pas assurée.

Le document DE-C1-378325 divulgue une paire de lunettes munie de moyens de maintien. Il s'agit de deux languettes coopérant avec la branche et situées de part et d'autre de la paire de lunettes sur la face extérieure des branches. Les languettes ne font que s'appliquer sur la branche sans s'y emboîter.

Le document US-A-5.235.721 présente un clip montable sur une branche de paire de lunettes. Un appui du bras du clip est effectué seulement sur une face de la branche de paire de lunettes.

Le document US-A-2.766.657 montre un dispositif de clipage pour l'accrochage d'une paire de lunettes dans les cheveux, les branches étant repliées. Le dispositif selon ce document est encombrant et ne concerne que le maintien de la paire de lunettes repliée.

La présente invention propose donc un perfectionnement pour les branches qui permet une très bonne stabilité des lunettes lorsque celles-ci sont sur le dessus de la tête, c'est-à-dire, non utilisées.

A cet effet, elle concerne une branche de lunettes, du type comportant un moyen de maintien par rapport à la chevelure de l'utilisateur des lunettes lorsque celles-ci sont positionnées sur le dessus de la tête, le moyen de maintien est constitué par une languette longitudinale qui coopère avec la branche pour constituer une pince pour les cheveux.

Le moyen de maintien est sensiblement parallèle à la branche avec laquelle il coopère.

Le moyen de maintien est solidaire de la branche de lunettes par son extrémité la plus proche de l'axe d'articulation de ladite branche, l'autre extrémité étant libre pour permettre le passage des cheveux.

Le moyen de maintien est de forme courbe dont la face concave est orientée face à la branche de lunettes afin de créer un espace pour les cheveux.

L'extrémité libre du moyen de maintien est arrondie.

L'extrémité libre du moyen de maintien est de forme courbe dont la face convexe est orientée face à la branche de lunettes, afin de faciliter le passage des cheveux dans l'espace servant à leur maintien.

La branche et le moyen de maintien sont monoblocs.

Le moyen de maintien est un élément rapporté et solidarisé à la branche par un élément de fixation.

L'extrémité de la languette, qui est solidaire de la branche se prolonge en direction de l'axe d'articulation sous la forme d'un levier qui permet d'actionner le reste de ladite languette.

La languette a un corps principal de forme demi-cylindrique qui est destinée à venir, en position d'appui, s'emboîter sur le bord supérieur de la branche de lunettes, l'extrémité, dirigée vers les carreaux des lunettes, est relevée pour former un point d'appui à la languette dont l'ensemble forme un levier, ledit levier est destiné à former la pince pour les cheveux, le point d'articulation dudit levier est situé entre la partie horizontale du corps demi-cylindrique de la languette et la partie relevée.

Au niveau de ce point d'articulation dudit levier formé par la languette, un moyen de fixation assure la fixation de la languette ; ledit moyen de fixation peut également faire office de moyen de rappel.

Le corps principal de forme demi-cylindrique est pourvu, sur chaque bordure, d'échancrures qui augmentent l'accrochage de ladite languette aux cheveux.

Les dessins ci-joints sont donnés à titre d'exemples indicatifs et non limitatifs. Ils représentent plusieurs modes de réalisation selon l'invention. Ils permettront de comprendre aisément l'invention.

La figure 1 représente une vue en perspective d'une paire de lunettes dont les deux branches sont équipées de moyens de maintien selon l'invention.

La figure 2 représente une vue en perspective et en coupe transversale selon A-A de la figure 1 au niveau de l'une des branches.

La figure 3 représente une vue identique à la figure 2, selon une variante de réalisation de l'élément de fixation.

La figure 4 représente une vue de dessus d'un moyen de maintien, selon une autre variante de réalisation, coopérant avec une partie d'une des branches des lunettes.

La figure 5 représente une paire de lunettes selon la figure 1 en position d'utilisation dans la chevelure d'un utilisateur.

La figure 6 est une vue en perspective d'une paire de lunettes dont les branches sont chacune équipée de moyens de maintien selon l'invention.

La figure 7 est une vue en coupe transversale de la languette et de la branche de lunettes selon l'axe A-A représenté à la figure 1.

La figure 8 est une vue d'une paire de lunettes mise en place dans la chevelure de l'utilisateur.

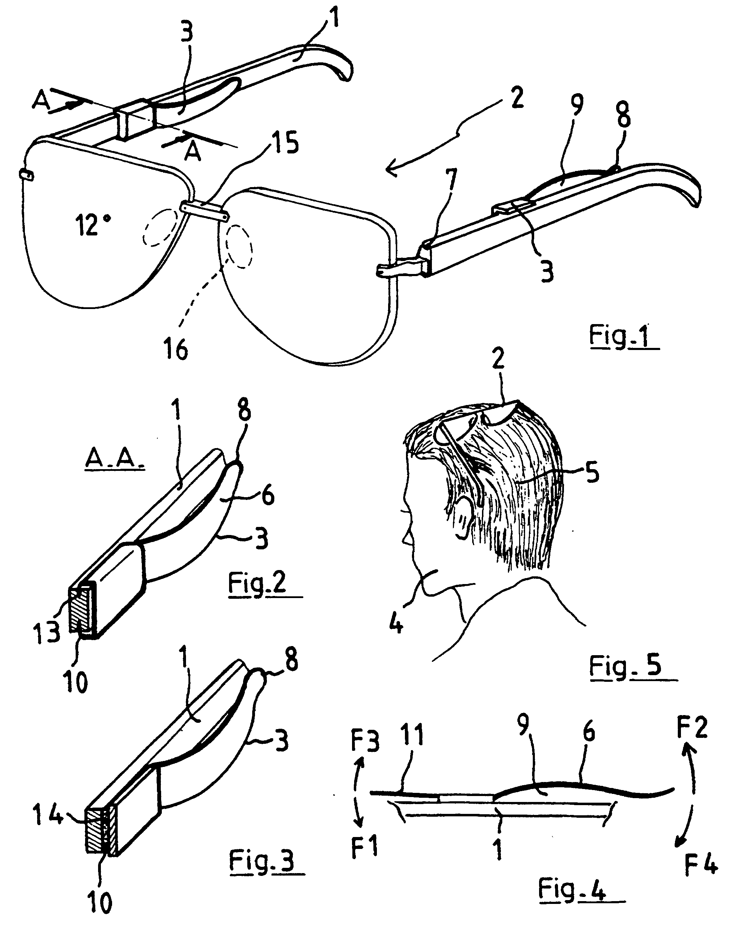

La présente invention concerne un perfectionnement aux branches 1 de lunettes 2. Au moins l'une des deux branches 1 des lunettes 2 peut être équipée d'un moyen de maintien 3 des lunettes 2 dans la chevelure 5 d'un utilisateur 4. C'est ce qui est bien représenté à la figure 5.

Ce moyen de maintien 3 est mieux représenté aux figures 1 à 4 selon trois modes différents de réalisation.

Sur les figures 1 et 2, le premier mode de réalisation est essentiellement constitué par une languette longitudinale 6, qui est en position sensiblement parallèle à la branche 1 avec laquelle elle coopère.

L'une de ses extrémités libres, orientée au plus près de l'axe d'articulation 7 de ladite branche 1, est en fait le point de solidarisation à la branche 1.

L'autre extrémité libre 8 est orientée en direction de l'extrémité libre de la branche 1, c'est par cette extrémité que les cheveux 5 peuvent être introduits à l'intérieur d'un espace 9, créé entre la branche 1, d'une part, et la languette longitudinale 6, d'autre part.

Pour que cet espace 9 ait des dimensions suffisantes pour permettre la mise en place et le coincement d'une quantité suffisante de cheveux 5, la languette longitudinale 6 est de forme courbe, la face concave étant orientée face à la branche 1. Les deux extrémités libres de la languette 6 seront donc au plus près de la branche 1.

Dans un mode de réalisation particulièrement intéressant représenté sur les figures, l'extrémité libre 8 est courbe et est dans une position inversée à celle du corps médian de la languette 6. Ainsi, c'est la partie convexe de l'extrémité libre 8 qui va être en vis-à-vis de ladite branche 1.

Cette forme permet de faciliter l'introduction des cheveux dans l'espace 9, sans pour autant avoir de risques de blessure au niveau de la tempe ou du cuir chevelu de l'utilisateur.

Entre les modes de réalisation des figures 1 et 2, d'une part, et 3, d'autre part, la différence essentielle réside dans l'élément de fixation 10 du moyen de maintien 3 sur la branche 1.

Selon les figures 1 et 2, cet élément de fixation 10 est constitué par des griffes de fixation 13 qui viennent s'encastrer à l'intérieur de ladite branche 1.

Selon la figure 3, les griffes peuvent être remplacées par une colle de fixation 14 ou toute autre substance suffisamment efficace pour permettre une fixation solide du moyen de maintien 3.

Le troisième mode de réalisation est bien représenté à la figure 4.

Dans ce cas, l'élément de fixation 10 peut être constitué par tout dispositif de l'élément de la technique. La différence essentielle réside dans le fait que la languette 6 se prolonge sous la forme d'un levier d'actionnement 11, en direction de l'axe d'articulation 7 de la branche 1. Ce levier d'actionnement 11 permettra, si l'on appuie selon F1 sur ce levier 11, l'ouverture de la pince, selon F2, pince qui est constituée, d'une part, par la branche 1 des lunettes 2, d'autre part, par la languette 6 du moyen de maintien 3.

En sens inverse, il y aura un rappel automatique en position, selon F3, du levier 11 dès que l'utilisateur cessera d'appuyer sur ledit levier 11. Dans ce cas, il y aura fermeture, selon F4, de la pince. Ceci permet de faciliter encore la mise en place des lunettes 2 dans la chevelure 5.

Bien entendu, cette invention peut être utilisée avec tout type de lunettes telles que celles représentées sur la figure 1, à savoir, une monture extrêmement légère, qui ne comporte qu'un pont nasal 15 entre deux verres 12, chaque verre 12 étant associé à une branche 1. On note également la présence d'éléments d'appui nasal 16 au niveau du pont nasal 15.

Bien entendu, le moyen de maintien 3 peut être mis en place sur l'une ou l'autre des branches 1, ou encore au niveau des deux branches 1 de la paire de lunettes 2.

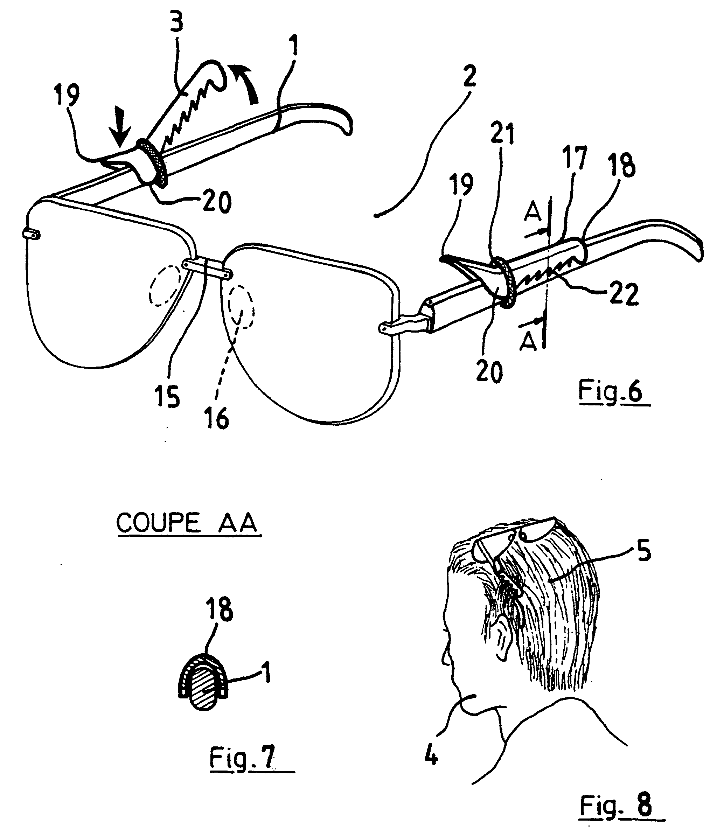

Selon les figures 6, 7 et 8, la branche 1 de lunettes 2 comporte un moyen de maintien 3 qui est constitué par une languette 3 longitudinale qui coopère avec la branche 1 pour faire office de pince pour les cheveux 5.

La languette 17 a un corps principal 18 de forme demi-cylindrique qui est destinée à venir, en position d'appui, s'emboîter sur le bord supérieur de la branche 1 de lunettes 2, l'extrémité 19 de la languette 19, dirigée vers les carreaux des lunettes 2, est relevée pour former un point d'appui à la languette 17 dont l'ensemble forme un levier. Ledit levier, ainsi formé par la languette 17 est destiné à former la pince pour les cheveux 5. Le point d'articulation 20 dudit levier formé par la languette 17 est situé entre la partie horizontale 18 du corps demi-cylindrique 18 de la languette 17 et l'extrémité de la languette qui forme la partie relevée 19.

Au niveau de ce point d'articulation 20 dudit levier formé par la languette 17, un moyen de fixation 21 assure la fixation de la languette. Ledit moyen de fixation 21 peut également faire office de moyen de rappel.

Le corps principal 18 de forme demi-cylindrique de la languette est pourvu, sur chaque bordure, d'échancrures 22 qui augmentent l'accrochage de ladite languette aux cheveux.

Le moyen de fixation 21 est un anneau en caoutchouc 21.

### REFERENCES

- 1.: Branche
- 2.: Lunettes
- 3.: Moyen de maintien
- 4.: Utilisateur
- 5.: Chevelure de l'utilisateur 4
- 6.: Languette longitudinale du moyen 3
- 7.: Axe d'articulation de la branche 1
- 8.: Extrémité libre courbe
- 9.: Espace
- 10.: Elément de fixation
- 11.: Levier d'actionnement de la languette 6
- 12.: Verres de lunettes 2
- 13.: Griffes de fixation
- 14.: Colle de fixation
- 15.: Pont nasal
- 16.: Elément d'appui nasal
- 17.: Languettes
- 18.: Corps principal de forme demi-cylindrique
- 19.: Extrémité relevée de la languette
- 20.: Point d'articulation
- 21.: Moyen de fixation ou anneau de caoutchouc
- 22.: Echancrures
- F1.: Appui sur le levier 11
- F2.: Ouverture de la pince
- F3.: Rappel en position du levier 11
- F4.: Fermeture de la pince

## Revendications

1. Branche (1) de lunettes (2), du type comportant un moyen de maintien (3) par rapport à la chevelure (5) de l'utilisateur (4) des lunettes (2) lorsque celles-ci sont positionnées sur le dessus de la tête le moyen de maintien (3) est constitué par une languette longitudinale (6, 17) qui coopère avec la branche (1) pour constituer une pince pour les cheveux (5), **caractérisée par le fait**
**que** la languette (6, 17) a un corps principal (18) de forme demi-cylindrique qui est destinée à venir, en position d'appui, s'emboîter sur le bord supérieur de la branche (1) de lunettes (2), l'extrémité (19), dirigée vers les carreaux des lunettes (2), est relevée pour former un point d'appui à la languette (17) dont l'ensemble forme un levier, ledit levier est destiné à former la pince pour les cheveux (5), le point d'articulation (20) dudit levier est situé entre la partie horizontale (18) du corps demi-cylindrique (18) de la languette et la partie relevée (19).

2. Branche, selon la revendication 1, **caractérisée par le fait**
**que** le moyen de maintien (3) est de forme courbe dont la face concave est orientée face à la branche (1) de lunettes (2) afin de créer un espace (9) pour les cheveux (5).

3. Branche, selon l'une quelconque des revendications 1 ou 2, **caractérisée par le fait**
**que** l'extrémité libre (8) du moyen de maintien (3) est arrondie.

4. Branche, selon les revendications 2 et 3, **caractérisée par le fait**
**que** l'extrémité libre (8) du moyen de maintien (3) est de forme courbe dont la face convexe est orientée face à la branche (1) de lunettes (2), afin de faciliter le passage des cheveux (5) dans l'espace (9) servant à leur maintien.

5. Branche selon l'une quelconque des revendications 1 à 4 **caractérisée par le fait**
**qu'**au niveau de ce point d'articulation (20) dudit levier formé par la languette, un moyen de fixation (21) assure la fixation de la languette ; ledit moyen de fixation (21) peut également faire office de moyen de rappel.

6. Branche selon l'une quelconque des revendications 1 à 5 **caractérisée par le fait**
**que** le corps principal (18) de forme demi-cylindrique est pourvu, sur chaque bordure, d'échancrures (22) qui augmentent l'accrochage de ladite languette aux cheveux.

## Patentansprüche

1. Bügel (1) für eine Brille (2) mit einem Halter (3) für das Haar (5) des Trägers (4) der Brille (2), der diese auf dem Kopf trägt, wobei der Halter (3) aus einer in Längsrichtung angeordneten Zunge (6, 17) besteht, die mit dem Bügel (1) zusammenwirkt, so dass eine Klammer für das Haar (5) entsteht, die **gekennzeichnet ist dadurch**,
dass die Zunge (6, 17) einen halbzylinderförmigen Hauptkörper (18) besitzt, der auf den oberen Rand des Bügels (1) der Brille (2) aufgesteckt wird, wobei das Ende (19), das in Richtung der Gläser der Brille (2) zeigt, hochgebogen ist, und einen Auflagepunkt für die Zunge (17) bildet, so dass das Ganze einen Hebel darstellt, der eine Klammer für das Haar (5) sein soll und wo das Gelenk (2) des genannten Hebels zwischen dem horizontalen Teil (17) des halbzylinderförmigen Körpers (18) der Zunge und dem hochgebogenen Teil (19) liegt.

2. Bügel gemäß Anspruch 1, **gekennzeichnet dadurch,**
**dass** der Halter (3) eine gewölbte Form hat, dessen konkave Seite in Richtung Bügel (1) der Brille (2) zeigt, um einen Raum (9) für die Haare (5) zu bilden.

3. Bügel gemäß einem der Ansprüche 1 oder 2, **gekennzeichnet dadurch,**
**dass** das freie Ende (8) des Halters (3) gerundet ist.

4. Bügel gemäß den Ansprüchen 2 und 3, **gekennzeichnet dadurch,**
**dass** das freie Ende (8) des Halters (3) eine gekrümmte Form hat, deren konvexe Seite in Richtung Bügel (1) der Brille (2) zeigt, um das Hineingleiten der Haare (5) in den zu ihrem Halten dienenden Raum (9) zu erleichtern.

5. Bügel gemäß einem der Ansprüche 1 bis 4, **gekennzeichnet dadurch,**
**dass** an dem Gelenkpunkt (20) des genannten Hebels, der von der Zunge gebildet wird, ein Befestigungselement (21) zum Befestigen der Zunge dient, wobei dieses Befestigungselement (21) auch als Rückholvorrichtung dienen kann.

6. Bügel gemäß einem der Ansprüche 1 bis 5, **gekennzeichnet dadurch,**
**dass** der halbzylinderförmige Hauptkörper (18) auf beiden Seiten Ausnehmungen (22) aufweist, welche das Haften der genannten Zunge an den Haaren verstärken.

## Claims

1. Branch (1) of glasses (2), including holding means (3) for user's (4) glasses (2) to grip the hair (5) when the glasses are positioned on the top of the head; the holding means (3) consisting of a longitudinal strip (6, 17) which acts with branch (1) to constitute a hair clip (5), **characterized in that**
strip (6, 17) has a main, semi-cylindrically shaped body (18) which is intended to fit on the upper edge of branch (1) of glasses (2); and upturned end (19) which is directed towards the lenses of the glasses (2), is raised to bear on strip (17) so that the assembly forms a lever, the aforementioned lever being intended to form the hair clip (5), pivot point (20) of the aforesaid lever is positioned between horizontal part (17) of semi-cylindrical body (18) of the strip and upturned end (19).

2. Branch, according to claim 1, **characterized in that**
holding means (3) is curved so that the concave face is oriented towards branch (1) of glasses (2) in order to create a space (9) for hair (5).

3. Branch, according to any one of claims 1 or 2, **characterized in that**
free end (8) of holding means (3) is rounded.

4. Branch, according to the claims 2 and 3, **characterized in that** free end (8) of holding means (3) is curve-shaped with the convex face of the curve oriented towards branch (1) of glasses (2), so that the hair (5) can more easily be slid into space (9) to hold it.

5. Branch according to any one of the claims 1 to 4 **characterized in that**
at pivot point (20) of the said lever formed by the strip are means (21) for holding the strip; the said means (21) also act as return means.

6. Branch according to any one of claims 1 to 5 **characterized in that**
main body (18) of the semi-cylindrical shape has, on each edge, indentations (22) which improve the grip of the aforementioned strip to the hair.
